Europäisches Patentamt

European Patent Office

Office européen des brevets

(19)

(11) **EP 1 607 213 A1**

(12) **DEMANDE DE BREVET EUROPEEN**

(43) Date de publication:
**21.12.2005 Bulletin 2005/51**

(21) Numéro de dépôt: **05291228.4**

(22) Date de dépôt: **08.06.2005**

(51) Int Cl.⁷: **B32B 1/08**, B32B 27/08,
B32B 27/30, B32B 27/32,
B32B 27/34, C08L 77/00,
C08L 23/04, B60K 15/03,
F16L 9/12

(84) Etats contractants désignés:
**AT BE BG CH CY CZ DE DK EE ES FI FR GB GR
HU IE IS IT LI LT LU MC NL PL PT RO SE SI SK TR**
Etats d'extension désignés:
**AL BA HR LV MK YU**

(30) Priorité: **18.06.2004 FR 0406635
10.10.2004 FR 0410391**

(71) Demandeur: **Arkema
92800 Puteaux (FR)**

(72) Inventeurs:
• **Flat, Jean-Jacques
27170 Goupillières (FR)**

• **Bellet, Gaëlle
27000 Evreux (FR)**
• **Brule, Benoît
27300 Bernay (FR)**
• **Blondel, Philippe
27300 Bernay (FR)**

(74) Mandataire: **Neel, Henry
ARKEMA
Département Propriété Industrielle
4-8, cours Michelet,
La Défense 10
92091 Paris La Défense Cedex (FR)**

(54) **Structure multicouche ayant une couche à base de polyamide et de pehd**

(57) La présente invention concerne une structure comprenant successivement :

une première couche de polyéthylène haute densité (HDPE),
une couche de liant,
une deuxième couche d'EVOH ou d'un mélange à base d'EVOH,
éventuellement une couche de liant,
une troisième couche d'un mélange comprenant en poids, le total étant 100% :

50 à 90% de polyamide (A) ayant une température de transformation d'au plus 230°C,
1 à 30% de polyéthylène haute densité (PEHD),
5 à 30% d'un modifiant choc choisi parmi les élastomères et les polyéthylènes de très basse densité,
l'un au moins du PEHD et du modifiant choc étant fonctionnalisé en tout ou partie,

les couches étant coextrudables.

La présente invention concerne aussi des dispositifs de transfert ou de stockage de fluides et plus particulièrement des tuyaux, des réservoirs, des goulottes, des bouteilles et des conteneurs constitués de la structure ci dessus et dans lesquels la couche du mélange de polyamide (A) et de PEHD est en contact direct avec le fluide contenu ou transporté. Ces dispositifs peuvent être fabriqués par les techniques habituelles de l'industrie des polymères thermoplastiques telles que la coextrusion et la coextrusion soufflage.

EP 1 607 213 A1

**Description**

*Domaine de l'invention*

La présente invention concerne une structure multicouche ayant une couche à base de polyamide et de PEHD (polyéthylène haute densité). Elle concerne aussi un réservoir constitué de cette structure ayant cette couche au contact direct du fluide contenu. La couche à base de polyamide et de PEHD des structures de l'invention constitue l'une des faces de la structure, c'est à dire qu'elle n'est pas à l'intérieur (en sandwich) de la structure. Ces structures sont utiles pour faire des dispositifs de transfert ou de stockage de fluides et plus particulièrement des tuyaux, des réservoirs, des goulottes de réservoir c'est à dire le tuyau qui sert à remplir le réservoir, des bouteilles et des conteneurs dans lesquels la couche à base de polyamide et de PEHD est en contact avec le fluide. Elle est particulièrement utile pour les réservoirs.

L'invention est utile pour un fluide tel que l'essence des automobiles en évitant les pertes à travers la structure pour ne pas polluer l'environnement. Elle est utile aussi pour des liquides contenant des substances volatiles en évitant un appauvrissement du liquide en cette substance volatile. L'invention est utile aussi pour le liquide de refroidissement des moteurs, pour l'huile et pour le fluide du systeme d'air conditionné.

*L'art antérieur et le problème technique*

Le brevet EP 742 236 décrit des réservoirs d'essence constitués de cinq couches qui sont respectivement :

- du polyéthylène haute densité (PEHD) ;
- un liant ;
- un polyamide (PA) ou un copolymère ayant des motifs éthylène et des motifs alcool vinylique (EVOH) ;
- un liant ;
- du PEHD.

On peut ajouter une sixième couche entre l'une des couches de liant et l'une des couches de PEHD. Cette sixième couche est constituée par exemple des chutes de fabrication consécutives à la mise en forme des réservoirs, de réservoirs non conformes pour une beaucoup plus petite quantité. Ces chutes et réservoirs non conformes sont broyés. Ce broyat est ensuite refondu et extrudé directement sur l'installation de coextrusion des réservoirs. Ce broyat pourrait être aussi fondu et regranulé par une machine d'extrusion telle qu'une extrudeuse bi-vis ou monovis avant d'être réutilisé.

Selon une variante, le produit recyclé peut être mélangé au PEHD des deux couches extrêmes du réservoir. On peut par exemple mélanger les granulés de produit recyclé aux granulés de PEHD vierge de ces deux couches. On peut aussi utiliser toute combinaison de ces recyclages. Le taux de matière recyclée peut représenter jusqu'à 50 % du poids total du réservoir.

Le brevet EP 731 308 décrit un tube comprenant une couche intérieure comprenant un mélange de polyamide et de polyoléfine à matrice polyamide et une couche extérieure comprenant un polyamide. Ces tubes à base de polyamide sont utiles pour le transport d'essence et plus particulièrement pour amener l'essence du réservoir des automobiles jusqu'au moteur et aussi, mais en plus gros diamètre, pour le transport d'hydrocarbures dans les stations-service entre les pompes de distribution et les stockages souterrains.

Selon une autre forme de l'invention, on peut disposer entre les couches intérieure et extérieure une couche d'un polymère comprenant des motifs éthylène et des motifs alcool vinylique (EVOH). On utilise avantageusement la structure : couche intérieure / EVOH / liant / couche extérieure.

Les réservoirs décrits dans EP 742 236 et qui n'ont pas la couche barrière en contact direct avec l'essence ont certes des propriétés barrière mais elles ne sont pas suffisantes quand on recherche des pertes en essence très faibles. EP 731 308 décrit des tuyaux qui ont leur couche extérieure en polyamide et la couche barrière en contact direct avec l'essence, la couche en polyamide est nécessaire pour la résistance mécanique de l'ensemble.

Le brevet EP 1122061 A décrit une structure comprenant successivement :

une première couche de polyéthylène haute densité (HDPE),
une couche de liant,
une deuxième couche d'EVOH ou d'un mélange à base d'EVOH,
éventuellement une troisième couche de polyamide ou d'un mélange de
polyamide et de polyoléfine.

Dans ce brevet sont décrits de nombreux mélanges de polyamide et de polyoléfine pouvant constituer la troisième couche. On a maintenant trouvé que cette troisième couche était nécessaire et de plus qu'elle devait contenir du PEHD pour obtenir de bonnes propriétés barrière. De plus la température de transformation du polyamide de cette troisième couche ne doit pas être trop élevée pour ne pas être trop éloignée de celle de l'EVOH.

***Brève description de l'invention***

La présente invention concerne une structure comprenant successivement :

une première couche de polyéthylène haute densité (PEHD),
une couche de liant,
une deuxième couche d'EVOH ou d'un mélange à base d'EVOH,
éventuellement une couche de liant,
une troisième couche d'un mélange comprenant en poids, le total étant 100% :

50 à 90% de polyamide (A) ayant une température de transformation d'au plus 230°C,
1 à 30% de polyéthylène haute densité (PEHD),
5 à 30% d'un modifiant choc choisi parmi les élastomères et les polyéthylènes de très basse densité,
l'un au moins du PEHD et du modifiant choc étant fonctionnalisé en tout

ou partie,

les couches étant coextrudables.
On peut utiliser un mélange de différents PEHD, il peut s'agir de différents PEHD non fonctionnalisés, d'un PEHD non fonctionnalisé et du même PEHD mais fonctionnalisé, d'un mélange d'un PEHD non fonctionnalisé et d'un autre PEHD mais fonctionnalisé, de deux PEHD greffés différents, ou toute combinaison de ces possibilités.
On peut utiliser un mélange de différents modifiants choc, il peut s'agir de différents modifiants choc non fonctionnalisés, d'un modifiant choc non fonctionnalisé et du même modifiant choc mais fonctionnalisé, d'un mélange d'un modifiant choc non fonctionnalisé et d'un autre modifiant choc mais fonctionnalisé, de deux modifiants choc différents fonctionnalisés, d'un modifiant choc fonctionnalisé et d'un PEHD fonctionnalisé avec éventuellement un modifiant choc non fonctionnalisé et éventuellement un PEHD non fonctionnalisé ou toute combinaison de ces possibilités.
Les couches sont "coextrudables" signifie qu'elles sont dans la même plage de rhéologie pour former par exemple une paraison qu'on pourra souffler pour former un corps creux ou un tube extrudé.
La proportion de fonctions du PEHD et/ou du modifiant choc doit être suffisante pour que la couche à base de polyamide (A) et de PEHD ait une tenue mécanique mais pas trop importante pour que la viscosité ne soit pas élevée au point que la couche ne soit plus coextrudable.
La présente invention concerne aussi des dispositifs de transfert ou de stockage de fluides et plus particulièrement des tuyaux, des réservoirs, des goulottes, des bouteilles et des conteneurs constitués de la structure ci dessus et dans lesquels la couche du mélange de polyamide (A) et de PEHD est en contact direct avec le fluide contenu ou transporté. Ces dispositifs peuvent être fabriqués par les techniques habituelles de l'industrie des polymères thermoplastiques telles que la coextrusion et la coextrusion soufflage.

***Description détaillée de l'invention***

**S'agissant de la première couche, le polyéthylène haute densité (PEHD)** est décrit dans le KIRK-OTHMER, 4^ème édition, Vol 17, pages 704 et 724-725. Il s'agit selon ASTM D 1248-84 d'un polymère de l'éthylène ayant une densité au moins égale à 0,940. L'appellation HDPE concerne à la fois les homopolymères de l'éthylène et ses copolymères avec de faibles proportions d'$\alpha$-oléfine. La densité est avantageusement comprise entre 0,940 et 0,965. Dans la présente invention le MFI du HDPE est avantageusement compris entre 0,1 et 50. A titre d'exemple on peut citer l'ELTEX B 2008® de densité 0,958 et MFI 0,9 (en g/10 min à 190°C sous 2,16 kg), le Finathene® MS201B de FINA et le Lupolen® 4261 AQ de BASF. S'agissant du polyéthylène haute densité de la première couche sa densité est avantageusement comprise entre 0,940 et 0,965 et le MFI entre 0.1 et 5 g/10 min. (190°C 5 kg).
**S'agissant de la deuxième couche, le copolymère EVOH** est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'impermeabilité aux gaz, aux liquides et en particulier à l'oxygène, à l'essence pour les automobiles. L'invention concerne plus particulièrement la barrière à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des $\alpha$-oléfines comme le propylène, l'isobutène, l'$\alpha$-octène, l'$\alpha$-dodécène, l'$\alpha$-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides, les modifiants choc éventuellement fonctionnalisés. Le modifiant choc peut être choisi parmi les élastomères, les copolymères de l'éthylène et d'une oléfine ayant de 4 à 10 atomes de carbone (par exemple les copolymères éthylène -octène) et les polyéthylènes de très basse densité. A titre d'exemple d'élastomère on peut citer l'EPR et l'EPDM. EPR (abréviation de Éthylène Propylene Rubber) désigne les élastomères éthylène-propylène et EPDM désigne les élastomères éthylène-propylène-diène monomère.

**A titre de premier exemple de ces mélanges à base d'EVOH de la deuxième couche** on peut citer les compositions comprenant (en poids) :

- 55 à 99,5 parties de copolymère EVOH,
- 0,5 à 45 parties de polypropylène et de compatibilisant, leurs proportions étant telles que le rapport de la quantité de polypropylène sur la quantité de compatibilisant est compris entre 1 et 5.

Avantageusement le rapport du MFI de l'EVOH au MFI du polypropylène est plus grand que 5 et de préférence compris entre 5 et 25. Avantageusement le MFI du polypropylène est compris entre 0,5 et 3 (en g/10mm à 230°C sous 2,16 kg) . Selon une forme avantageuse le compatibilisant est un polyéthylène portant des greffons polyamide et il résulte de la réaction (i) d'un copolymère de l'éthylène et d'un monomère insaturé X greffé ou copolymérisé avec (ii) un polyamide. Le copolymère de l'éthylène et d'un monomère insaturé X greffé ou est tel que X est copolymérisé et il peut être choisi parmi les copolymères éthylène-anhydride maléique et les copolymères éthylène - (méth)acrylate d'alkyle - anhydride maléique, ces copolymères comprennant de 0,2 à 10 % en poids d'anhydride maléique et de 0 à 40 % en poids de (méth)acrylate d'alkyle.

Selon une autre forme avantageuse le compatibilisant est un polypropylène portant des greffons polyamide qui résulte de la réaction (i) d'un homopolymere ou d'un copolymère du propylène comprenant un monomère insaturé X, greffé ou copolymérisé, avec (ii) un polyamide. Avantageusement X est greffé. Le monomère X est avantageusement un anhydride d'acide carboxylique insaturé tel que par exemple l'anhydride maleique.

**A titre de deuxième exemple de ces mélanges à base d'EVOH de la deuxième couche** on peut citer les compositions comprenant :

- 50 à 98 % en poids d'un copolymère EVOH
- 1 à 50 % en poids d'un polyéthylène
- 1 à 15 % en poids d'un compatibilisant constitué d'un mélange d'un polyéthylène LLDPE ou métallocène et d'un polymère choisi parmi les élastomères, les polyéthylènes de très basse densité et les polyéthylènes métallocènes, le mélange étant cogreffé par un acide carboxylique insaturé ou un dérivé fonctionnel de cet acide.

Avantageusement le compatibilisant est tel que le rapport $MFI_{10}/MFI_2$ est compris entre 5 et 20, où $MFI_2$ est l'indice d'écoulement en masse fondue à 190°C sous une charge de 2,16 kg, mesuré suivant ASTM D1238, $MFI_{10}$ est l'indice d'écoulement en masse fondue à 190°C sous une charge de 10 kg suivant ASTM D1238.

**A titre de troisième exemple de ces mélanges à base d'EVOH de la deuxième couche** on peut citer les compositions comprenant :

- 50 à 98 % en poids d'un copolymère EVOH
- 1 à 50 % en poids d'un copolymère éthylène - (méth)acrylate d'alkyle,
- 1 à 15 % en poids d'un compatibilisant résultant de la réaction (i) d'un copolymère de l'éthylène et d'un monomère insaturé X greffé ou copolymérisé avec (ii) un copolyamide.

Avantageusement le copolymère de l'éthylène et d'un monomère insaturé X greffé ou copolymérisé est tel que X est copolymèrisé et c'est un copolymère de l'éthylène et de l'anhydride maléique ou un copolymère de l'éthylène, d'un (méth)acrylate d'alkyle et de l'anhydride maléique.

Avantageusement ces copolymères comprennent de 0,2 à 10 % en poids d'anhydride maléique et de 0 à 40 % en poids de (méth)acrylate d'alkyle.

**A titre de quatrième exemple de ces mélanges à base d'EVOH de la deuxième couche** on peut citer les compositions comprenant :

- 50 à 98 % en poids d'un copolymère EVOH,
- 2 à 50% en poids d'un élastomère éventuellement fonctionnalisé en tout ou partie ou d'un mélange d'un élastomère fonctionnalisé et d'un autre élastomère non fonctionnalisé.

**S'agissant du mélange de polyamide (A) et de PEHD de la troisième couche** on entend par température de transformation la température à laquelle il est coextrudé avec le matériau des autres couches et/ou coextrudé et soufflé avec le matériau des autres couches. Pour les polyamides semi-cristallins c'est une température au dessus de la température de fusion (désignée habituellement par Tf ou Tm) et pour les polyamides amorphes c'est bien sûr une température au dessus de la Tg (température de transition vitreuse). On entend généralement par "au dessus" une différence de 10 à 50°C.

**Ce polyamide (A)** est choisi parmi les produits qui contiennent des motifs provenant:

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines avec des diacides. A titre d'exemple de diacide on peut citer les acides isophtalique, téréphtalique ou des diacides carboxyliques ayant de 6 à 18 atomes de carbone tels que les acides adipique, azélaïque, subérique, sébacique et dodécanedicarboxylique. La diamine peut être une diamine aliphatique ayant de 6 à 18 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque $HOOC-(CH_2)_{10}-COOH$.

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Tous ces polyamides (A) sont connus en eux memes et fabriqués selon les procédés habituels des polyamides

Avantageusement le copolyamide est choisi parmi le PA 6 / 12 et le PA 6 / 6-6.

On peut utiliser des mélanges de polyamide. Avantageusement la viscosité relative mesurée dans l'acide sulfurique à 96% est comprise entre 2 et 5.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamides et blocs polyether.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{M}n$ des séquences polyamides est comprise entre 300 et 15 000 et de préférence entre 600 et 5 000. La masse $\overline{M}n$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10/90 et 60 / 40.

**S'agissant du PEHD de la troisième couche** sa densité est avantageusement comprise entre 0,940 et 0,965 et le MFI entre 1 et 10 g/10 min. (190°C 5 kg).

**S'agissant du modifiant choc** et d'abord des élastomères on peut citer les polymères blocs SBS, SIS, SEBS, et les élastomères éthylène / propylène (EPR) ou éthylène / propylène / diène (EPDM). Quant aux polyéthylènes de très basse densité ce sont par exemple des métallocènes de densité par exemple entre 0,860 et 0,900.

On utilise avantageusement un élastomère éthylène / propylène (EPR) ou éthylène / propylène / diène (EPDM). La fonctionnalisation peut être apportée par greffage ou copolymérisation avec un acide carboxylique insaturé. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bieyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur un polymère. Par exemple, ceci peut être réalisé en chauffant les polymères à température élevée, environ 150° à environ 300°C, en présence ou en l'absence d'un solvant avec ou sans générateur de radicaux. La quantité du monomère de greffage peut être choisie d'une façon appropriée mais elle est de préférence de 0,01 à 10 %, mieux de 600 ppm à 2 % par rapport au poids du polymère sur lequel on fixe le greffon.

On peut greffer, en tout ou partie, le modifiant choc et le mélanger avec le PEHD. On peut greffer le PEHD, en tout ou partie, et le mélanger avec le modifiant choc. On peut aussi séparement greffer, en tout ou partie, le modifiant choc, greffer le PEHD, en tout ou partie, puis mélanger les deux produits greffés. On peut aussi mélanger le modifiant choc avec le PEHD et greffer, en tout ou partie, le mélange.

La proportion de PEHD fonctionnalisé et/ou de modifiant fonctionnalisé par rapport à l'ensemble du PEHD fonctionnalisé ou non et du modifiant choc fonctionnalisé ou non peut être comprise (en poids) entre 0 et 70%, avantageusement entre 5 et 60% et de préférence entre 20 et 60%.

Selon une forme de l'invention le PEHD n'est pas fonctionnalisé et le modifiant choc est en tout ou partie fonctionnalisé.

**Les proportions du mélange de la troisième couche** sont avantageusement, le total étant 100% :

55 à 80% de polyamide (A),
10 à 20% de polyéthylène haute densité (PEHD),
10 à 30 % de modifiant choc.

La préparation des mélanges de la troisième couche peut se faire par mélange des différents constituants à l'état fondu dans les appareillages habituels de l'industrie des polymères thermoplastiques.

**La première couche peut être constituée** d'une couche de PEHD vierge et d'une couche de polymères recyclés (qu'on appelle aussi couche de rebroyés ou "regrind") provenant de chutes lors de la fabrication des dispositifs de transfert ou de stockage ou de ces dispositifs non conformes ainsi qu'il est expliqué dans l'art antérieur déjà cité. Cette couche de recyclé est située du coté de la couche de liant. Dans la suite du texte on designera par simplification ces deux couches par le terme "première couche". Dans cette couche de recyclés on peut ajouter des polyoléfines fonctionnalisées en proportion pouvant être par exemple comprise entre 0,1 et 10% en poids. Ces polyoléfines fonctionnalisées sont avantageusement choisies parmi les liants. Dans cette couche de recyclés on peut ajouter soit du PEHD soit des polyoléfines fonctionnalisées soit un mélange des deux.

L'épaisseur de la première couche peut être comprise entre 2 et 10 mm, celle de la deuxième entre 30 et 500 µm et celle de la troisième entre 500 µm et 4 mm. S'agissant des réservoirs l'épaisseur totale est habituellement comprise entre 3 et 10 mm.

**A titre d'exemple de liant** on peut citer les polyoléfines fonctionnalisées. Le liant entre la première et la deuxième couche et celui entre la deuxième et la troisième couche peuvent être identiques ou différents. Dans les descriptions suivantes de liants le terme polyéthylène désigne aussi bien des homopolymères que des copolymères.

**A titre de premier exemple de liant** on peut citer un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

Selon une variante on peut citer un mélange (i) d'un polymère (C2) choisi parmi les élastomères, les polyéthylènes de très basse densité et les copolymères de l'éthylène (C2) étant greffé par un acide carboxylique insaturé et (ii) d'un polymère (C'2) choisi parmi les élastomères, les polyéthylènes de très basse densité et les copolymères de l'éthylène.

**A titre de deuxième exemple de liant** on peut citer les mélanges comprenant :

- 5 à 30 parties d'un polymère (D) lui-même comprenant un mélange d'un polyéthylène (D1) de densité comprise entre 0,910 et 0,940 et d'un polymère (D2) choisi parmi les élastomères, les polyéthylènes de très basse densité et les polyéthylènes métallocènes, le mélange (D1) + (D2) étant cogreffé par un acide carboxylique insaturé,
- 95 à 70 parties d'un polyéthylène (E) de densité comprise entre 0,910 et 0,930,
- le mélange de (D) et (E) étant tel que :

· sa densité est comprise entre 0,910 et 0,930,
· la teneur en acide carboxylique insaturé greffé est comprise entre 30 et 10000 ppm,
· le MFI (ASTM D 1238 - 190°C - 2,16 kg) est compris entre 0,1 et 3 g / 10 min Le MFI désigne l'indice d'écoulement à l'état fondu.

La densité du liant est avantageusement comprise entre 0,915 et 0,920. Avantageusement (D1) et (E) sont des LLDPE , de préférence ils ont le même comonomere. Ce comonomère peut être choisi parmi est le 1-héxène, le 1-octène et le 1-butène.

**A titre de troisième exemple de liant** on peut citer les mélanges comprenant:

- 5 à 30 parties d'un polymère (F) lui-même comprenant un mélange d'un polyéthylène (F1) de densité comprise entre 0,935 et 0,980 et d'un polymère (F2) choisi parmi les élastomères, les polyéthylènes de très basse densité et les copolymères de l'éthylène, le mélange (F1) + (F2) étant cogreffé par un acide carboxylique insaturé,
- 95 à 70 parties d'un polyéthylène (G) de densité comprise entre 0,930 et 0,950,
- le mélange de (F) et (G) étant tel que :

  · sa densité est comprise entre 0,930 et 0,950 et avantageusement entre 0,930 et 0,940,
  · la teneur en acide carboxylique insaturé greffé est comprise entre 30 et 10000 ppm,
  · le MFI (indice d'écoulement à l'état fondu) mesuré selon ASTM D 1238 à 190°C - 21,6 kg est compris entre 5 et 100.

**A titre de quatrième exemple de liant** on peut citer le polyéthylène greffé par de l'anhydride maléique ayant un MFI 0,1 à 3, de densité comprise entre 0,920 et 0,930 et qui contient 2 à 40 % en poids d'insolubles dans le n-décane à 90°C. Pour determiner les insolubles dans le n- decane le polyéthylène greffé est dissous dans le n-décane à 140°C, on le refroidit à 90°C, des produits précipitent ; puis on le filtre et le taux d'insolubles est le pourcentage en poids qui précipite et est recueilli par filtration à 90°C. Si le taux est compris entre 2 et 40 % le liant a une bonne résistance à l'essence.

Avantageusement le polyéthylène greffé est dilué dans un polyéthylène non greffé et tel que le liant est un mélange de 2 à 30 parties d'un polyéthylène greffé de densité comprise entre 0,930 et 0,980 et de 70 à 98 parties d'un polyéthylène non greffé de densité comprise entre 0,910 et 0,940 de preference 0,915 et 0,935.

**A titre de cinquième exemple de liant** on peut citer les mélanges comprenant:

- 50 à 100 parties d'un polyéthylène (J) homo ou copolymère de densité supérieure ou égale à 0,9,
- 0 à 50 parties d'un polymère (K) choisi parmi (K1) le polypropylène homo ou copolymère, (K2) le poly(1-butène) homo ou copolymère et (K3) le polystyrène homo ou copolymère,
- la quantité de (J) + (K) étant de 100 parties,
- le mélange de (J) et (K) étant greffé par au moins 0,5 % en poids d'un monomère fonctionnel,
- ce mélange greffé étant lui même dilué dans au moins un polyéthylène homo ou copolymère (L) ou dans au moins un polymère à caractère élastomérique (M) ou dans un mélange de (L) et (M),

Selon une forme de l'invention (J) est un LLDPE de densité 0,91 à 0,930, le comonomère ayant de 4 à 8 atomes de carbone. Selon une autre forme de l'invention (K) est un PEHD, avantageusement de densité au moins 0,945 et de préférence 0,950 à 0,980.

Avantageusement le monomère fonctionnel est l'anhydride maléique et sa teneur est de 1 à 5 % en poids de (J) + (K).

Avantageusement (L) est un LLDPE dont le comonomère a de 4 à 8 atomes de carbone et de préférence sa densité est d'au moins 0,9 et de préférence 0,910 à 0,930.

Avantageusement la quantité de (L) ou (M) ou (L) + (M) est de 97 à 75 parties pour 3 à 25 parties de (J) + (K), la quantité de (J) + (K) + (L) + (M) étant de 100 parties.

**A titre de sixième exemple de liant** on peut citer les mélanges constitués d'un polyéthylène de type HDPE, LLDPE, VLDPE ou LDPE, 5 à 35 % d'un polyéthylène métallocène greffé et 0 à 35 % d'un élastomère, le total étant 100%.

**A titre de septième exemple de liant** on peut citer les mélanges comprenant :

- au moins un polyéthylène ou un copolymère de l'éthylène,
- au moins un polymère choisi parmi le polypropylène ou un copolymère du propylène, le poly (1-butène) homo ou copolymère, le polystyrène homo ou copolymère et de préférence le polypropylène,

ce mélange étant greffé par un monomère fonctionnel, ce mélange greffé étant lui-même éventuellement dilué dans au moins une polyoléfine ou dans au moins un polymère à caractère élastomérique ou dans leur mélange. Dans le mélange précédent qu'on greffe le polyéthylène représente avantageusement au moins 50% de ce mélange et de préférence 60 à 90% en poids.

Avantageusement le monomère fonctionnel est choisi parmi les acides carboxyliques et leurs dérivés, les chlorures d'acides, les isocyanates, les oxazolines, les époxydes, les amines ou les hydroxydes et de préférence les anhydrides d'acides dicarboxyliques insaturés.

**A titre de huitième exemple de liant** on peut citer les mélanges comprenant :

- au moins un polyéthylène LLDPE ou VLDPE
- au moins un élastomère à base d'ethylene choisi parmi les copolymères éthylène — propylène et les copolymères éthylène — butene
- ce mélange de polyéthylène et d'élastomère étant greffé par un acide carboxylique insaturé ou un dérivé fonctionnel de cet acide
- ce mélange cogreffé étant éventuellement dilué dans un polymère choisi parmi les polyethylenes homo ou copolymères et les copolymères blocs du styrène

le liant ayant

(a) une teneur en éthylène qui n'est pas inférieure à 70% en mole
(b) une teneur en acide carboxylique ou en son dérivé, de 0,01 à 10% en poids du liant et
(c) un rapport $MFI_{10}/MFI_2$ de 5 à 20, où $MFI_2$ est l'indice d'écoulement en masse fondue à 190°C sous une charge de 2,16 kg, mesuré suivant ASTM D1238, $MFI_{10}$ est l'indice d'écoulement en masse fondue à 190°C sous une charge de 10 kg suivant ASTM D1238.

Les différentes couches de la structure de l'invention, y compris les couches de liant, peuvent contenir en outre au moins un additif choisi parmi :

- les charges (minérales, anti-feu, conductrices...),
- les nanocharges telles que par exemples les nanoargiles,
- les nanocomposites,
- les fibres,
- les colorants,
- les pigments,
- les azurants,
- les anti-oxydants,
- les agents nucléants,
- les stabilisateurs UV.

[Exemples]

Polymères utilisés :

**PA A1**: terpolymère de caprolactame (L6), acide adipique (AA)et hexaméthylène diamine (HMDA) possédant un rapport massique L6/[AA+HMDA] de 85/15 et un « nombre de viscosité » de 186 selon la norme ISO 307.

**PA A2:** copolymère de caprolactame et de lauryllactame possédant une composition monomérique pondérale 70/30 et une viscosité inhérente (mesurée à 20°C pour une concentration de 0.5g pour 100 ml de métacrésol) de 1.3 dl/g.

**PA A3:** copolymère de caprolactame et de lauryllactame possédant une température de fusion de 190°C et indice de fluidité de 120 selon la norme ISO 1133 mesuré dans les conditions : 275°C sous une charge de 5 kg.

**PA A4**: homopolymère de lauryllactame possédant une viscosité inhérente (mesurée à 20°C pour une concentration de 0.5g pour 100 ml de métacrésol) de 1.55 à 1.74 dl/g.

**PA A5:** homopolymère d'amino 11 undécanoique acide possédant une viscosité inhérente (mesurée à 20°C pour une concentration de 0.5g pour 100 ml de métacrésol) de 1.35 à 1.52 dl/g.

**PA A6** (10.10) : copolymère équimolaire de l'acide sébacique (AS) et de la décanedimaine (DA) possédant une viscosité inhérente (mesurée à 20°C pour une concentration de 0.5g pour 100 ml de métacrésol) de 1.4 dl/g.

**PA A7** (MXD.10) : copolymère équimolaire de la méta xylylène diamine (MXD) et de l'acide sébacique (AS) possédant une viscosité inhérente (mesurée à 20°C pour une concentration de 0.5g pour 100 ml de métacrésol) de 1.4 dl/g.

**PA A8** (MXD.12) : copolymère équimolaire de la méta xylylène diamine (MXD) et de l'acide dodécanedioique (DDA) possédant une viscosité inhérente (mesurée à 20°C pour une concentration de 0.5g pour 100 ml de métacrésol) de 1.4 dl/g.

**PE 1** : Polyéthylène possédant une densité de 0.952 selon la norme ISO 1183 et un indice de fluidité de 23 selon la norme ISO 1133 mesuré dans les conditions : 190°C sous une charge de 21.6 kg.

**PE 2** : Polyéthylène possédant une densité de 0.949 selon la norme ISO 1183 et un indice de fluidité de 8 g/10min selon la norme ISO 1133 mesuré dans les conditions : 190°C sous une charge de 21.6 kg.

**P1** : Terpolymère d'éthylène, propylène et de monomère diénique possédant une densité de 0.89 et une viscosité Mooney (ML 1+4, 125°C) de 30 et greffé à un taux de 1 % par l'anhydride maléique.

**P2:** Terpolymère d'éthylène, propylène et de monomère diénique (lequel) possédant une viscosité Mooney de 30 dans les conditions ML (1 +4) 100°C.

**EVOH** : copolymère d'éthylène et d'alcool vinylique possédant une fraction massique d'éthylène de 29% et un indice de viscosité de 3.2 mesuré selon la norme ISO 1133 dans les conditions suivantes : 210°C sous une charge de 2.16 kg.

**L1** (Orevac) : Polyéthylène greffé par 3000 ppm d'anhydride maléique et possédant un indice de fluidité de 1 mesuré selon la norme ASTM 1238 dans les conditions suivantes : 190°C sous une charge de 2.16 kg.

**Alliage 1 :** Mélange compatibilisé de PA et de PP possédant une Tf de 255°C et un indice de viscosité de 15 mesuré selon la norme ISO 1133 dans les conditions suivantes : 275°C sous une charge de 2.16 kg commercialisé par la demanderesse sous la référence Orgalloy® RS6600.

**Alliage 2 :** Mélange compatibilisé de PA et de PE possédant une Tf de 225°C mais une température de transformation de 250°C et un indice de viscosité de 2 mesuré selon la norme ISO 1133 dans les conditions suivantes : 235°C sous une charge de 2.16 kg commercialisé par la demanderesse sous la référence Orgalloy ®LE 6000.

**Alliage 3** : Mélange compatibilisé de PA et de PE possédant une Tf de 195°C et et un indice de viscosité de 3 mesuré selon la norme ISO 1133 dans les conditions suivantes : 235°C sous une charge de 2.16 kg commercialisé par la demanderesse sous la référence Orgalloy® LEC601.

Préparation des alliages de polyamide et de polyoléfine :

Les alliages de polyamide et de polyoléfine sont préparés à l'aide d'une extrudeuse double vis co-rotative de type Werner und Pfleiderer ZSK 40 (diamètre = 40 mm, L=40D).

Préparation des corps creux multicouches par co-extrusion soufflage :

Les bouteilles multicouches sont préparées à l'aide d'une ligne de co-extrusion soufflage Bekum munie de 5 extrudeuses dont les fourreaux sont régulés à 220°C sauf mention contraire. Les structures soufflées sont de 2 types :

- des structures quatre couches décrites comme suit depuis l'intérieur vers l'extérieur :

     1. Alliage de polyamide et de polyoléfine
     Epaisseur :30% de l'épaisseur totale (extrudeuse 1)
     2. EVOH
     Epaisseur : 5% de l'épaisseur totale (extrudeuse 2)
     3. L1
     Epaisseur : 5% de l'épaisseur totale (extrudeuse 3)
     4. PE2
     Epaisseur : 60% de l'épaisseur totale (extrudeuse 4)
     L'épaisseur totale est en moyenne de 3 mm.

- des structures cinq couches décrites comme suit depuis l'intérieur vers l'extérieur :

     1. Alliage de polyamide et de polyoléfine
     Epaisseur : 30% de l'épaisseur totale (extrudeuse 1)
     2. L1
     Epaisseur : 5% de l'épaisseur totale (extrudeuse 5)
     3. EVOH
     Epaisseur : 5% de l'épaisseur totale (extrudeuse 2)
     4. L1
     Epaisseur : 5% de l'épaisseur totale (extrudeuse 3)
     5. PE2
     Epaisseur : 55% de l'épaisseur totale (extrudeuse 4)
       L'épaisseur totale est en moyenne de 3 mm.

Résistance au choc des bouteilles :

Les bouteilles soufflées, conditionnées préalablement à -40°C, sont testées sur une de leur surface plane en résistance à l'impact dans les conditions suivantes : T=-40°C et vitesse d'impact = 4.3 m/s.

La courbe force-déplacement issue de cet essai permet de calculer la résistance au choc de la bouteille multicouche.

Résultats :

Exemples 1 à 3 :

3 bouteilles 4 couches dont les structures sont rassemblées dans le tableau ci dessous ont été extrudées soufflées sur la ligne d'extrusion Bekum.

| Structure | **EXEMPLE 1*** (comparatif) | **EXEMPLE 2**** (comparatif) | **EXEMPLE 3** |
|---|---|---|---|
| | Alliage 1<br>EVOH<br>L1<br>PE2 | Alliage 2<br>EVOH<br>L1<br>PE2 | Alliage 3<br>EVOH<br>L1<br>PE2 |
| Qualité de la coextrusion | Défaut de coextrusion | Défaut de coextrusion | Correcte |

\* L'extrudeuse 1 est régulée à 280°C

\*\* L'extrudeuse 1 est régulée à 250°C

Ces expérimentations démontrent qu'il convient d'utiliser un polyamide possédant une température de transformation inférieure à 230°C pour assurer une mise en oeuvre correcte par co extrusion soufflage.

Exemples 4 à 7 :

Les alliages de polyamide et de polyoléfines rassemblés dans les tableaux ci-dessous ont été préparés :

| **COMPOSITION:** | Alliage 4 | Alliage 5 | Alliage 6 | Alliage 7 |
|---|---|---|---|---|
| PA A1 | | 50 | 50 | |
| PA A2 | 71 | | | 60 |
| PE 1 | 25 | 15 | 15 | 15 |
| P1 | 4 | 35 | 29 | 19 |
| P2 | | | 6 | 6 |

Exemples 8 à 11 :

4 bouteilles 5 couches dont les structures sont rassemblées dans le tableau ci dessous ont été extrudées soufflées sur la ligne d'extrusion Bekum.

| Structure | EXEMPLE 8 | EXEMPLE 9 | EXEMPLE 10 | EXEMPLE 11 |
|---|---|---|---|---|
| | Alliage 4<br>L1<br>EVOH<br>L1<br>PE2 | Alliage 5<br>L1<br>EVOH<br>L1<br>PE2 | Alliage 6<br>L1<br>EVOH<br>L1<br>PE2 | Alliage 7<br>L1<br>EVOH<br>L1<br>PE2 |
| Qualité de la coextrusion | Correct | Défaut de coextrusion | Défaut de coextrusion | Correct |
| Résistance au choc | NON* | OUI** | OUI | OUI |

*«NON» signifie que la valeur de la résistance au choc mesurée est inférieure à 50 J

** « OUI » signifie que la valeur de la résistance au choc mesurée dépasse 50 J

Exemples 12 à 17 :

Les alliages de polyamide et de polyoléfine rassemblés dans les tableaux ci-dessous ont été préparés :

| COMP : | Alliage 12 | Alliage 13 | Alliage 14 | Alliage 15 | Alliage 16 | Alliage 17 |
|---|---|---|---|---|---|---|
| PA A3 | 60 | | | | | |
| PA A4 | | 60 | | | | |
| PA A5 | | | 60 | | | |
| PA A6 | | | | 60 | | |
| PA A7 | | | | | 60 | |
| PA A8 | | | | | | 60 |
| PE 1 | 15 | 15 | 15 | 15 | 15 | 15 |
| P 1 | 19 | 19 | 19 | 19 | 19 | 19 |
| P2 | 6 | 6 | 6 | 6 | 6 | 6 |

Exemples 18 à 22 :

6 bouteilles 5 couches dont les structures sont rassemblées dans le tableau ci dessous ont été extrudées soufflées sur la ligne d'extrusion Bekum.

| Structure | EXEMPLE 17 | EXEMPLE 18 | EXEMPLE 19 | EXEMPLE 20 | EXEMPLE 21 | EXEMPLE 22 |
|---|---|---|---|---|---|---|
| | Alliage 12<br>L1<br>EVOH<br>L1<br>PE2 | Alliage 13<br>L1<br>EVOH<br>L1<br>PE2 | Alliage 14<br>L1<br>EVOH<br>L1<br>PE2 | Alliage 15<br>L1<br>EVOH<br>L1<br>PE2 | Alliage 16<br>L1<br>EVOH<br>L1<br>PE2 | Alliage 17<br>L1<br>EVOH<br>L1<br>PE2 |
| Qualité de la coextrusion | Correct | Correct | Correct | Correct | Correct | Correct |
| Résistance au choc | OUI* | OUI | OUI | OUI | OUI | OUI |

* « OUI » signifie que la valeur de la résistance au choc mesurée dépasse 50 J

**Revendications**

1. Structure comprenant successivement :

   une première couche de polyéthylène haute densité (HDPE),
   une couche de liant,
   une deuxième couche d'EVOH ou d'un mélange à base d'EVOH,
   éventuellement une couche de liant,
   une troisième couche d'un mélange comprenant en poids, le total étant 100% :

   50 à 90% de polyamide (A) ayant une température de transformation d'au plus 230°C,
   1 à 30% de polyéthylène haute densité (PEHD),
   5 à 30% d'un modifiant choc choisi parmi les élastomères et les polyéthylènes de très basse densité,
   l'un au moins du PEHD et du modifiant choc étant fonctionnalisé en tout ou partie,

   les couches étant coextrudables.

2. Structure selon la revendication 1 dans laquelle la polyamide (A) est le PA6/6-6 et le PA 6/ 12.

3. Structure selon la revendication 1 ou 2 dans laquelle la proportion de PEHD fonctionnalisé et/ou de modifiant fonctionnalisé par rapport à l'ensemble du PEHD fonctionnalisé ou non et du modifiant choc fonctionnalisé ou non est comprise (en poids) entre 0 et 70%.

4. Structure selon la revendication 3 dans laquelle a proportion de PEHD fonctionnalisé et/ou de modifiant fonctionnalisé par rapport à l'ensemble du PEHD fonctionnalisé ou non et du modifiant choc fonctionnalisé ou non est comprise (en poids) entre 5 et 60%.

5. Structure selon la revendication 4 dans laquelle a proportion de PEHD fonctionnalisé et/ou de modifiant fonctionnalisé par rapport à l'ensemble du PEHD fonctionnalisé ou non et du modifiant choc fonctionnalisé ou non est comprise (en poids) entre 20 et 60%.

6. Structure selon l'une quelconque des revendications précédentes dans laquelle le PEHD n'est pas fonctionnalisé et le modifiant choc est en tout ou partie fonctionnalisé.

7. Structure selon l'une quelconque des revendications précédentes dans laquelle le modifiant choc est un EPR ou un EPDM.

8. Structure selon l'une quelconque des revendications précédentes dans laquelle le modifiant choc fonctionnalisé est un EPR ou.un EPDM greffé anhydride maléique.

9. Structure selon l'une quelconque des revendications précédentes dans laquelle Les proportions du mélange de la troisième couche sont, le total étant 100% :

   55 à 80% de polyamide (A),
   10 à 20% de polyéthylène haute densité (PEHD),
   10 à 30 % de modifiant choc.

10. Structure selon l'une quelconque des revendications précédentes dans laquelle une couche de polymères recyclés est disposée entre la première couche et la couche de liant.

11. Structure selon la revendication 10 dans laquelle on a ajouté dans la couche de recyclés des polyoléfines fonctionnalisées et/ou du PEHD.

12. Dispositifs de transfert ou de stockage de fluides et plus particulièrement des tuyaux, des réservoirs, des goulottes, des bouteilles et des conteneurs constitués de la structure selon l'une quelconque des revendications précédentes et dans lesquels la troisième couche est en contact direct avec le fluide contenu ou transporté. [2]

**Office européen des brevets**

**RAPPORT DE RECHERCHE EUROPEENNE**

Numéro de la demande

EP 05 29 1228

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | EP 1 122 061 A1 (ATOFINA) 8 août 2001 (2001-08-08) * page 2, alinéa 9 * * page 4, alinéas 24,31 * * page 5, alinéas 61,66-71 * | 1-4,6,12 | B32B1/08 B32B27/08 B32B27/30 B32B27/32 B32B27/34 C08L77/00 C08L23/04 B60K15/03 F16L9/12 |
| X | * page 10, ligne 10-13 * * page 12; tableau 1 * * revendications 1,2,10-12,14,18 * ----- | 10 | |
| Y | EP 1 314 759 A (ATOFINA) 28 mai 2003 (2003-05-28) * page 3, ligne 3-11 * * page 5, ligne 41 - page 6, ligne 19 * * page 7, ligne 14 - page 8, ligne 55 * * page 9, ligne 10 - page 10, ligne 5 * * revendications 1,2,10-15 * ----- | 1-12 | |
| Y | US 5 643 997 A (MATSUOKA MASAMI ET AL) 1 juillet 1997 (1997-07-01) * colonne 3, ligne 56 - colonne 4, ligne 50 * * colonne 10, ligne 31 - colonne 12, ligne 30 * * tableaux 1,3,4 * * colonne 22, ligne 56 - colonne 23, ligne 2; revendications 1,2 * ----- | 1-12 | **DOMAINES TECHNIQUES RECHERCHES (Int.Cl.7)** B32B C08L B60K F16L |
| A | EP 1 036 968 A (ATOFINA) 20 septembre 2000 (2000-09-20) * page 3, ligne 28-40 * * page 6, ligne 8-25,40-43 * * page 6, ligne 49 - page 7, ligne 14 * * page 11; exemples 2,4 * * revendications 1,4,6-9,12 * ----- -/-- | 1,3,4,6, 9,12 | |

Le présent rapport a été établi pour toutes les revendications

| Lieu de la recherche | Date d'achèvement de la recherche | Examinateur |
|---|---|---|
| Munich | 19 septembre 2005 | Lindner, T |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

**Office européen
des brevets**

## RAPPORT DE RECHERCHE EUROPEENNE

Numéro de la demande

EP 05 29 1228

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 814 379 A (FLOOD ET AL) 21 mars 1989 (1989-03-21) * colonne 3, ligne 25 - colonne 4, ligne 33; revendications 1-5; exemple 1 * ----- | 1,3-10, 12 | |
| D,A | EP 0 731 308 A1 (ELF ATOCHEM S.A) 11 septembre 1996 (1996-09-11) * page 3, ligne 19-52; revendications 1,2,7; exemple * ----- | 1,12 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| Munich | 19 septembre 2005 | Lindner, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 1228

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2005

| Document brevet cité au rapport de recherche | | Date de publication | Membre(s) de la famille de brevet(s) | | Date de publication |
|---|---|---|---|---|---|
| EP 1122061 | A1 | 08-08-2001 | AUCUN | | |
| EP 1314759 | A | 28-05-2003 | BR | 0206897 A | 24-08-2004 |
| | | | CA | 2412128 A1 | 23-05-2003 |
| | | | CN | 1425552 A | 25-06-2003 |
| | | | JP | 2003191358 A | 08-07-2003 |
| | | | JP | 2005199720 A | 28-07-2005 |
| | | | US | 2003124289 A1 | 03-07-2003 |
| US 5643997 | A | 01-07-1997 | AUCUN | | |
| EP 1036968 | A | 20-09-2000 | AT | 249002 T | 15-09-2003 |
| | | | CA | 2300635 A1 | 16-09-2000 |
| | | | CN | 1277336 A | 20-12-2000 |
| | | | DE | 60004907 D1 | 09-10-2003 |
| | | | ES | 2206147 T3 | 16-05-2004 |
| | | | JP | 2000313079 A | 14-11-2000 |
| | | | JP | 2004299402 A | 28-10-2004 |
| US 4814379 | A | 21-03-1989 | CA | 1309534 C | 27-10-1992 |
| | | | DE | 68909085 D1 | 21-10-1993 |
| | | | EP | 0337153 A2 | 18-10-1989 |
| | | | JP | 1311149 A | 15-12-1989 |
| EP 0731308 | A1 | 11-09-1996 | CA | 2171414 A1 | 10-09-1996 |
| | | | CN | 1137974 A | 18-12-1996 |
| | | | DE | 69602048 D1 | 20-05-1999 |
| | | | DE | 69602048 T2 | 11-11-1999 |
| | | | ES | 2130759 T3 | 01-07-1999 |
| | | | JP | 3167921 B2 | 21-05-2001 |
| | | | JP | 8247345 A | 27-09-1996 |
| | | | KR | 185010 B1 | 01-04-1999 |
| | | | TW | 426609 B | 21-03-2001 |
| | | | US | 6177162 B1 | 23-01-2001 |

EPO FORM P0460

Pour tout renseignement concernant cette annexe : voir Journal Officiel de l'Office européen des brevets, No.12/82